# EUROPEAN PATENT APPLICATION

(11) **EP 2 735 960 A2**
(43) Date of publication of application: **28.05.2014**
(21) Application number: 13194597.4
(22) Date of filing: 27.11.2013
(51) Int. Cl.: G06F 3/0488, G06F 3/0485

(54) **Electronic device and page navigation method**

(30) Priority: 27.11.2012 KR 20120135415
(71) Applicant: Samsung Electronics Co., Ltd, Gyeonggi-do 443-742 (KR)
(72) Inventor: Woo, Seungsoo, 443-742 Gyeonggi-do (KR); Jeon, Yongjoon, 443-742 Gyeonggi-do (KR); Park, Kwangweon, 443-742 Gyeonggi-do (KR)
(74) Representative: Gover, Richard Paul

(57) **Abstract**

An electronic device and a page navigation method thereof for facilitating navigation among pages are provided. The method disclosure includes displaying a first page, detecting a touch gesture requesting navigation to a second page on a screen displaying the first page, displaying the second page overlapped with the first page upon detection of the touch gesture, changing a transparency of at least one of the first and second pages according to a movement distance between a current touch point and an initial touch point of the touch gesture, and displaying, when the touch gesture is released, one of the first and second pages.

## Description

### TECHNICAL FIELD

The present disclosure relates to an electronic device and a page navigation method. More particularly, certain embodiments of the present disclosure relate to an electronic device and page navigation method thereof for facilitating navigation among pages.

### BACKGROUND

Recent electronic devices have been provided with webpage access functions. Such an internet-enabled electronic device supports navigating from a currently displayed webpage to a previous webpage in response to a predetermined key (cancel or back key) input. However, the webpage navigation method of the related art has a drawback in that the user cannot check the next known page in advance.

An internet-enabled electronic device may also be provided with a page navigation function to display a current page and accessible pages in the form of a list of thumbnail images and to navigate to a webpage corresponding to a thumbnail image selected from the list. This page navigation method is advantageous as it allows the user to check pages to navigate in advance but requires plural laborious operations of registration, resulting in user inconvenience.

There is therefore a need for a page navigation method of an electronic device that is capable of conveniently allowing a user to check a page to navigate to in advance.

The above information is presented as background information only to assist with an understanding of the present disclosure. No determination has been made, and no assertion is made, as to whether any of the above might be applicable as prior art with regard to the present disclosure.

### SUMMARY

An aim of certain embodiments of the present disclosure is to provide an electronic device and page navigation method thereof that is capable of allowing the user to check the pages to navigate in advance, resulting in simple and fast webpage navigation and improvement of user convenience.

According to a first aspect of the present disclosure there is provided a page navigation method of an electronic device, the method comprising: displaying a first page; detecting a touch gesture requesting navigation to a second page on a screen displaying the first page; displaying the second page overlapped with the first page upon detection of the touch gesture; changing a transparency of at least one of the first and second pages according to a movement distance between a current touch point and an initial touch point of the touch gesture; and displaying, when the touch gesture is released, one of the first and second pages.

According to a second aspect of the present disclosure there is provided an electronic device, the device comprising: a display panel configured to display a first page; a touch panel configured to detect a touch gesture requesting navigation to a second page on a screen displaying the first page; and a control unit configured to: control the display panel to display the second page overlapped with the first page upon detection of the touch gesture; change a transparency of at least one of the first and second pages according to a movement distance between a current touch point and an initial touch point of the touch gesture; and display, when the touch gesture is released, one of the first and second pages.

In accordance with a first embodiment of the present disclosure, a page navigation method of an electronic device is provided. The method includes displaying a first page of an electronic document, detecting a touch gesture requesting navigation to a second page on a screen displaying the first page, displaying the second page overlapped with the first page upon detection of the touch gesture, changing transparencies of the first and second pages according to a distance between a current touch point and an initial touch point of the touch gesture, and displaying, when the touch gesture is released, one of the first and second pages opaquely.

Displaying of the second page may comprise initially presenting the first page with a transparency of 0% and the second page with a transparency of 100%, and the changing of the transparencies comprises increasing the transparency of the first page and decreasing the transparency of the second page as the distance increases and decreasing the transparency of the first page and increasing the transparency of the second page as the distance decreases.

Displaying of the one of the first and second pages opaquely may comprise displaying, when the touch gesture is released in a state that the transparency of the second page is equal to or less than a first threshold, the second page opaquely and, when the transparency of the second page is greater than the first threshold, the first page opaquely.

The method may further comprise: displaying, when the distance is greater than a second threshold for increasing the transparency of the first page to 100%, a third page subsequent to the second page in a direction of the touch gesture along with the second page in an overlapped manner; and displaying, when the touch gesture is released in a state that the distance is greater than the second threshold, one of the second and third pages opaquely.

The second threshold may comprise one of a value obtained by dividing one of horizontal and vertical lengths of a display panel by a number of pages capable of being navigated, a value obtained by dividing a distance between the initial touch point and an end of the screen in a direction of the touch gesture by the number of pages capable of being navigated, and a predetermined value.

The touch gesture may comprise one of a gesture of drawing a predetermined figure and a scroll gesture made in a direction to which the first page cannot be scrolled.

Displaying of the second page may comprise overlapping the first page and a thumbnail image of the second page at least partially.

The overlapping of the first page and a thumbnail image of the second page at least partially may comprise moving the thumbnail image to be overlapped with the first page entirely as the distance increases.

The method may further comprise: checking, when the touch gesture is detected, whether the second page exists; and notifying, when no second page exists, of absence of the second page.

In accordance with a second embodiment of the present disclosure, an electronic device is provided. The electronic device includes a display panel which displays a first page of an electronic document, a touch panel which detects a touch gesture requesting navigation to a second page on a screen displaying the first page, and a control unit configured to control the display panel to display the second page overlapped with the first page upon detection of the touch gesture, to change transparencies of the first and second pages according to a distance between a current touch point and an initial touch point of the touch gesture, and to display, when the touch gesture is released, one of the first and second pages opaquely.

The control unit may control the display panel to initially present the first page with a transparency of 0% and the second page with a transparency of 100%, increases the transparency of the first page and decreases the transparency of the second page as the distance increases, and decreases the transparency of the first page and increases the transparency of the second page as the distance decreases.

The control unit may control the display panel to display, when the touch gesture is released in a state that the transparency of the second page is equal to or less than a first threshold, the second page opaquely and, when the transparency of the second page is greater than the first threshold, the first page opaquely.

The control unit may control the display panel to display, when the distance is greater than a second threshold for increasing the transparency of the first page to 100%, a third page subsequent to the second page in a direction of the touch gesture along with the second page in an overlapped manner and, when the touch gesture is released in a state that the distance is greater than the second threshold, one of the second and third pages opaquely.

The second threshold may comprise one of a value obtained by dividing one of horizontal and vertical lengths of a display panel by a number of pages capable of being navigated, a value obtained by dividing a distance between the initial touch point and an end of the screen in a direction of the touch gesture by the number of pages capable of being navigated, and a predetermined value.

The touch gesture may comprise one of a gesture of drawing a predetermined figure and a scroll gesture made in a direction to which the first page cannot be scrolled.

The control unit may control to overlap the first page and a thumbnail image of the second page at least partially and to move the thumbnail image to be overlapped with the first page entirely as the distance increases.

The control unit may check, when the touch gesture is detected, whether the second page exists and notify, when no second page exists, of absence of the second page.

Another aspect of the disclosure provides a computer program comprising instructions arranged, when executed, to implement a method in accordance with any one of the above-described aspects. A further aspect provides machine-readable storage storing such a program.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain exemplary embodiments of the present disclosure will be more apparent from the following description taken in conjunction with the accompanying drawings, in which:
FIG. 1A is a block diagram illustrating a configuration of the electronic device according to an embodiment of the present disclosure;
FIG. 1B is a diagram illustrating a method for setting a second threshold for used in the electronic device of FIG. 1A according to an embodiment of the present disclosure.
FIG. 2 is a flowchart illustrating a page navigation method according to an embodiment of the present disclosure;
FIG. 3 is a flowchart illustrating the page navigation method of the electronic device according to the first embodiment of the present disclosure;
FIG. 4 is a flowchart illustrating the page navigation method of the electronic device according to the second embodiment of the present disclosure; and
FIGS. 5, 6, 7, 8, 9, and 10 are diagrams illustrating touch gestures made on the screen of the electronic device to navigate pages in the page navigation method according to an embodiment of the present disclosure.

The same reference numerals are used to represent the same elements throughout the drawings.

### DETAILED DESCRIPTION

The following description with reference to the accompanying drawings is provided to assist in a comprehensive understanding of various embodiments of the present disclosure as defined by the claims. It includes various specific details to assist in that understanding but these are to be regarded as merely exemplary. Accordingly, those of ordinary skill in the art will recognize that various changes and modifications of the various embodiments described herein can be made without departing from the scope of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Throughout the description and claims of this specification, the words "comprise" and "contain" and variations of the words, for example "comprising" and "comprises", means "including but not limited to", and is not intended to (and does not) exclude other components, integers or steps.

Features, integers or characteristics described in conjunction with a particular aspect, embodiment or example of the present disclosure are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

An electronic device as discussed herein may be any of a mobile communication terminal, a smartphone, a tablet Personal Computer (PC), a handheld PC, a Portable Multimedia Player (PMP), a Personal Digital Assistant (PDA), a laptop computer, and an electronic-book terminal. In the following, the description is directed to the mobile communication terminal.

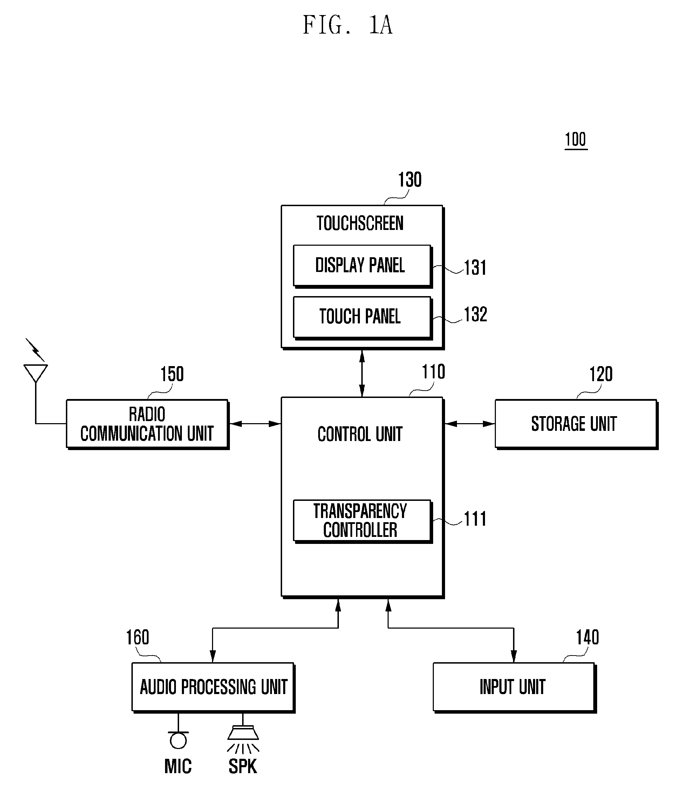

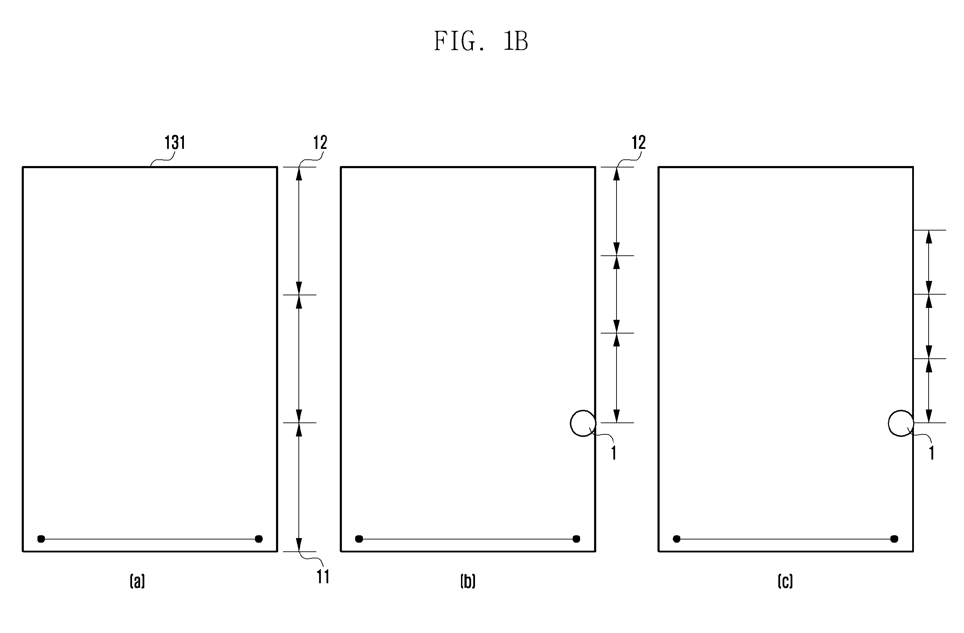

FIG. 1A is a block diagram illustrating a configuration of the electronic device according to an embodiment of the present disclosure, and FIG. 1 B is a diagram illustrating a method for setting a second threshold for used in the electronic device of FIG. 1A according to an embodiment of the present disclosure.

Referring to FIGS. 1 A and 1 B, the electronic device 100 may include a control unit 110, a storage unit 120, a touchscreen 130, an input unit 140, a radio communication unit 150, and an audio processing unit 160. The control unit 110 may include a transparency controller 111, and the touchscreen 130 may include a display panel 131 and a touch panel 132.

The input unit 140 is provided with input keys for receiving alphanumeric and other input and functions keys for setting and controlling functions of the electronic device. The function keys may include navigation keys, side keys, and shortcut keys configured for performing predetermined functions. The input unit 140 generates key signals to the control unit 110 in association with the user settings and function control of the electronic device. In an embodiment of the present disclosure, the input unit is capable of generating a signal for requesting display of a certain page (e.g., a webpage display request signal or an incoming or outgoing message display request signal) or a page navigation request signal (e.g., a previous or next webpage navigation request signal, a next incoming message display request signal, or a previous or next outgoing message display request signal) to the control unit 110. Such an input unit 140 can be implemented with at least one of button keypad, ball joystick, optical joystick, wheel key, touch key, touchpad, touchscreen 130, mouse, etc. In the case that the electronic device 100 is equipped with a full touchscreen, the input unit 140 may be implemented at a side of the electronic device 100 with only the volume keys for adjusting audio volume and screen on/off or power on/off function key.

The radio communication unit 150 is responsible for a wireless radio communication of the electronic device 100 and, if the electronic device supports a mobile communication function, may include a mobile communication module. For this purpose, the radio communication unit 150 may include a Radio Frequency (RF) transmitter for up-converting and amplifying the transmission signal and an RF receiver for low noise amplifying and down-converting the received signal. In the case that the electronic device 100 supports Wi-Fi communication, Bluetooth communication, or Near Field Communication (NFC), the radio communication unit 150 includes a corresponding Wi-Fi module, Bluetooth module, or NFC module. In an embodiment of the present disclosure, the radio communication unit 150 is capable of transmitting an access request for a certain webpage and downloading the corresponding webpage under the control of the control unit 110. The radio communication unit 150 may transmit and receive a radio signal carrying a text message.

The audio processing unit 160 is implemented with the audio parts for transmitting/receiving audio signals and encoding and decoding the audio signal. The audio processing unit may include a coder-decoder (codec) and an audio amplifier (not shown). The audio processing unit 150 is connected to a microphone (MIC) and a speaker (SPK) to process the audio signal input through the microphone to generate audio data to the control unit 110 and to process the audio signal output by the control unit 110 to generate analog signal to the speaker, respectively. The audio processing unit 160 is capable of outputting various audio signals generated by the electronic device 100 through the speaker SPK. In an embodiment of the present disclosure, the audio processing unit 160 is capable of outputting certain sound effects such as notifying of page navigation and alarming of no page to navigate.

The touchscreen 130 is responsible for input function and display function. In order to accomplish these, the touchscreen 130 may include the display panel 131 and the touch panel 132.

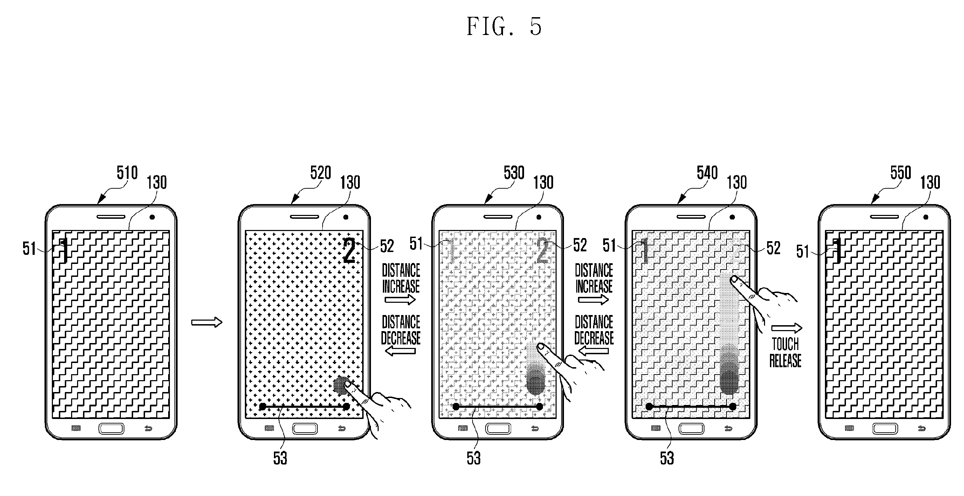

The display panel 131 displays information input by or presented to the user and various menus of the electronic device 100. For example, the display panel 131 is capable of displaying various screens associated with the operations of the electronic device 100, e.g., a home screen, a message composition screen, an incoming and/or outgoing message display screen, a webpage screen, and a telephony screen. The display panel may be implemented with any of a Liquid Crystal Display (LCD), an Organic Light Emitting Diode (OLED), and an Active Matrix OLED (AMOLED). Particularly in an embodiment of the present disclosure, when a touch gesture for page navigation is detected in the state that a certain page is displayed, the display panel 131 is capable of displaying the page to navigate to next along with the current page. At this time, the display panel 131 displays the current page with a transparency of 0% (i.e., a fully opaque state) while displaying the page to navigate with a transparency of 100% (i.e., fully invisible). Between the extremes of transparent (100% transparency) and opaque (0% transparency) the page may be considered to be translucent: images or pages behind the page may be visible through that page and there may be a mixing or blurring of images. Afterward, the display panel 131 is capable of displaying the current page and the navigational page (that is, the page that is to be navigated to next) with the transparencies adjusted based on the distance of the dragged point from the initial touch point of the touch gesture under the control of the control unit 110. If the touch gesture is released, the display panel 131 displays one of the current page and the navigational page with the transparency of 0%. The various screens that can be displayed on the display panel 131 are described later with reference to FIGS. 5 to 10.

In an alternative embodiment of the present disclosure the current page may be displayed overlying the navigational page. The navigational page may be fully opaque throughout the process. The current page may initially be fully opaque (0% transparency). Next, only the transparency of the current page may be adjusted such that as it becomes increasingly transparent the navigational page begins to be visible through the current page. When the transparency of the current page reaches 100% the navigational page will be fully visible.

In a further alternative embodiment of the present disclosure the navigational page may be displayed overlying the current page. The current page may be fully opaque throughout the process. The navigational page may initially be fully transparent (100% transparency). Next, only the transparency of the navigational page may be adjusted such that as it becomes opaque the current page begins to be obscured by the navigational page. When the transparency of the navigational page reaches 0% the current page will be fully obscured.

It will be appreciated that the transparency of each of the navigational page and the current page may be adjusted at different rates during different phases of the process and indeed for some phases of the process the transparency of one of the navigational or current pages may not be adjusted at all.

The touch panel 132 covers the entire surface of the display panel 131 to detect the gesture made thereon by means of a touch tool such as finger, stylus, or electronic pen, and generates a corresponding input signal to the control unit 110. In detail, the touch panel 132 recognizes the touch gesture based on the change in a physical quantity (e.g., capacitance or resistance) according to the contact or proximity of the touch tool, and generates the type and position of the touch gesture to the control unit 110. The type of touch can be any of a 'tap' in which a touch is followed by an immediate release, a 'double tap' in which the tap is made twice within a threshold time, a 'long tap' in which the tap is maintained over a threshold duration, a 'multi touch' in which the touch gesture is made with at least two touch points, and a 'drag' in which the touch is made with a touch point moving between the touch and the release. The drag gesture may include a scroll gesture in which the touch point moves linearly in a certain direction and then draws a predetermined figure (e.g., a circle or triangle). Since the structure of the touch panel 132 is known in the related art, a detailed description thereon is omitted herein. In an embodiment of the present disclosure, the touch panel 132 is capable of detecting a drag gesture (such as a scroll gesture) requesting page navigation in the state that a certain page is displayed and generating the corresponding signal to the control unit 110.

The storage unit 120 stores programs for operating functions of the electronic device 100 and user data received or generated in use. For example, the storage unit 120 stores a program for controlling the overall operations of the electronic device 100, the Operating System (OS) for booting up the electronic device 100, application programs necessary for optional functions such as a camera function, still and motion image playback function, and short range radio communication function, and the incoming and outgoing text messages. The storage unit 120 is also capable of storing a key map and a menu map for operating the touchscreen 130. Here, the key map and menu map can be implemented in various forms. For example, the key map can be any of a keyboard map, a 3*4 key map, a QWERTY key map, and a control key map dedicated to the currently running application. In an embodiment of the present disclosure, the storage unit 120 stores the page navigation display control program for displaying, when a drag gesture for a page navigation request is input in the state that a certain page is displayed, the navigational page as overlapped with the current page, changing the transparencies of the current page and the navigational page according to the distance of the dragged point from the initial touch point of the drag gesture, and displaying one of the current and navigational pages upon release of the drag gesture.

The storage unit 120 is also capable of storing the webpages visited previously by means of a web browser and the thumbnail images corresponding to the previously visited webpages. The stored thumbnail images are overlaid on the current webpage in response to the page navigation request. Afterward, the thumbnail images change gradually in transparency according to the distance of the dragged point from the initial touch point of the drag gesture. Each thumbnail image may have the same aspect ratio as the screen aspect ratio of the display panel 131.

The storage unit 120 is also capable of storing the predefined gestures for page navigation. The gestures may include a previous page navigation gesture and a next page navigation gesture. The gesture may be changed by the user.

The storage unit 120 is also capable of storing a first threshold for selecting the page to be displayed on the display panel 131 upon the release of the drag gesture. For example, the first threshold may be set to a value of the distance of the dragged point from the initial touch point to adjust the transparency of the navigational page to 50%. At this time, if the drag gesture is released in the state that the drag distance is equal to or greater than the first threshold, the navigational page is displayed on the display panel 131 and, otherwise if the drag gesture is released in the state that the drag distance is less than the first threshold, the current page is displayed on the display panel 131.

The first threshold may be configured as the threshold of the transparency of the navigational page. For example, if the first reference value is set to 50% and if the drag gesture is released in the state that the transparency of the navigational page is equal to or greater than 50%, the current page is displayed on the display panel 131 and, otherwise if the drag gesture is released in the state that the transparency of the navigational page is less than 50%, the navigational page is displayed on the display panel 131. The first threshold may be configured as the threshold of the transparency of the current page. In this case, if the drag gesture is released in the state that the transparency of the current page is less than 50%, the current page is displayed on the display panel 131 and, otherwise if the drag gesture is released in the state that the transparency of the current page is equal to or greater than 50%, the navigational page is displayed on the display panel 131.

The storage unit 120 is also capable of storing the second threshold as the distance of the dragged point from the initial touch point of at which the transparency of the current page becomes 100%. The second threshold may be configured as a fixed value or a value variable according to the number of pages capable of being navigated in the direction of the drag gesture. Referring to FIG. 1 B, the second threshold may be the value obtained by dividing one of the horizontal or vertical length of the display panel 131 by the number of pages to navigate. For example, assuming that the number of pages capable of being navigated is three, the second threshold can be the value obtained by dividing the length from the bottom end 11 to the top end of the display panel 131 by three to obtain threshold distances as shown in part (a) of FIG. 1 B. At this time, if the number of pages to navigate is one, the second threshold is set to the length from the bottom end 11 to the top end 12 of the display panel 131.

The second threshold may be the value obtained by dividing the distance from the initial touch point 1 to the end of the display panel 131 in the same direction as the drag gesture by the number of pages capable of being navigated. For example, if the drag is made in the direction from the bottom to the top of the display panel 131, the second threshold can be the value obtained by dividing the distance from the initial touch point 1 to the top end 12 of the touch panel by three as shown in part (b) of FIG. 1 B. At this time, if the number of pages to navigate is 1, the second threshold is set to the distance from the initial touch point 1 to the top end 12 of the screen.

The second threshold may be set to a fixed value regardless of the number of pages capable of being navigated as shown in part (c) of FIG. 1 B.

FIG. 1B is directed to the case where the second threshold is configured in association with the vertical direction of the display panel 131. However, it will be clear to those skilled in the art that the second threshold can alternatively be set in association with the horizontal direction of the display panel 131.

The control unit 110 controls overall operations of the electronic device 100 and signal flows among the internal function blocks of the electronic device 100 and processes data. The control unit 110 can be any of a Central Processing Unit (CPU) and an Application Processor (AP). In an embodiment of the present disclosure, the control unit 110 is capable of displaying the current page and the navigational page in an overlaid manner upon detection of the page navigation request gesture (e.g., a scroll gesture) and adjusting the transparencies of the current and navigational pages according to the distance of the dragged point from the initial touch point of the drag gesture. In order to accomplish this, the control unit 110 includes the transparency controller 111.

Upon detection of the drag gesture, the transparency controller 111 may adjust the transparency of the current page to 0% and the transparency of the navigational page to 100%. Afterward, if the distance of the dragged point from the initial touch point of the drag gesture increases, the transparency controller 111 increases the transparency of the current page and decreases the transparency of the navigational page. The drag distance may decrease when the drag direction changes oppositely to the initial touch point, and the transparencies may change accordingly.

Afterward, when the drag gesture is released, the transparency controller 111 may adjust the transparency of one of the current and navigational pages to 0% and the transparency of the others to 100%. At this time, the control unit 110 controls such that the page having the transparency of 0% is displayed with the disappearance of other pages. For example, the control unit 110 may compare the distance of the dragged point from the initial touch point of the drag gesture, transparency of the current page, or the transparency of the navigational page to a predetermined first threshold at the time when the drag gesture is released. Afterward, the control unit 110 controls such that one page effectively disappears and the other is displayed with the transparency of 0%.

The control unit 110 is also capable of controlling such that the current and navigational pages are overlapped partially in the state that the current page is fixed and the overlapped area increases as the distance of the dragged point from the initial touch point of the drag gesture increases.

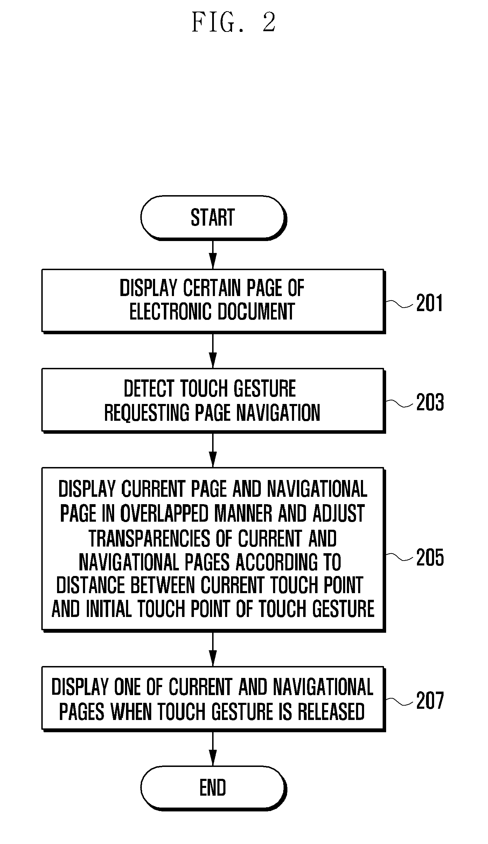

If there are plural pages capable of being navigated, and if the distance of the dragged point from the initial touch point of the drag gesture is greater than the second threshold corresponding to the distance where the transparency of the current page becomes 100%, the control unit 110 controls such that the current page disappears and the subsequent pages capable of being navigated are displayed in an overlapped manner. The operation of the control unit 110 is described later in more detail with reference to FIGS. 2 to 10.

Although not shown in FIGS. 1A and 1 B, the electronic device 100 may further include at least one of a Global Positioning System (GPS) module for acquiring location information, a broadcast reception module for receiving a broadcast signal, a digital audio playback module such as a Motion Picture Experts Group (MPEG)-2 Audio Layer III (MP3) module, and an Internet access module for supporting Internet access, selectively. Although not enumerated herein, the electronic device 100 according to an embodiment of the present disclosure is capable of optionally including other components equivalent to or varying from the aforementioned components.

FIG. 2 is a flowchart illustrating a page navigation method according to an embodiment of the present disclosure.

Referring to FIG. 2, the control unit 110 controls the display panel 131 to display a certain page (a current page) of an electronic document at operation 201. The electronic document means an image displayed on the display panel 131 in the form of a page. The electronic document may include plural pages that can be navigated. The present disclosure is applicable to various screens such as the web browser display screen, the text message display screen, the gallery display screen, the contract information display screen, and the audio playback screen.

Next, the control unit 110 may detect a touch gesture, for instance a drag gesture, requesting page navigation at operation 203. The drag gesture may include a predefined gesture and a scroll gesture made in a direction to which the page navigation is not allowed.

If the drag gesture is detected, the control unit 110 controls the display panel 131 to display the current page and the navigational page in an overlaid manner and adjusts the transparencies of at least one of the current and navigational pages at operation 205. In more detail, in one embodiment the control unit 110 initially displays the current page with the transparency of 0% (opaque) and the navigational page with the transparency of 100% (invisible) on the current page. Afterward, if the distance of the dragged point from the initial touch point increases, the control unit 110 increases the transparency of the current page and decreases the transparency of the navigation page. In contrast, if the distance of the dragged point from the initial touch point decreases, the control unit 110 decreases the transparency of the current page and increases the transparency of the navigational page.

Next, the control unit 110 controls the display panel 131 to display either the current page or one of the navigational pages upon the release of the drag gesture at operation 207. For example, if the distance of the dragged point from the initial touch point is equal to or greater than the first threshold (e.g., a distance configured to set the transparency of the navigational page to 50%), the control unit 110 controls such that the current page disappears while the navigational page appears opaquely. In contrast, if the distance of the dragged point from the initial touch point is less than the first threshold, the control unit 110 controls such that the navigational page disappears while the current page appears opaquely.

If the transparency of the navigational page is equal to or less than the first threshold, the control unit 110 controls such that the current page disappears while the navigational page appears opaquely. In contrast, if the transparency of the navigational page is greater than the first threshold, the control unit 110 controls such that the navigational page disappears while the current page appears opaquely.

The control unit 110 is also capable of controlling such that the one of the current and navigational pages is displayed based on the transparency of the current page. For example, the control unit 110 is capable of controlling such that a current page having a transparency equal to or greater than the first threshold disappears while the navigational page appears opaquely. In contrast, the control unit 110 is similarly capable of controlling such that the current page having a transparency less than the first threshold appears opaquely while the navigational page disappears.

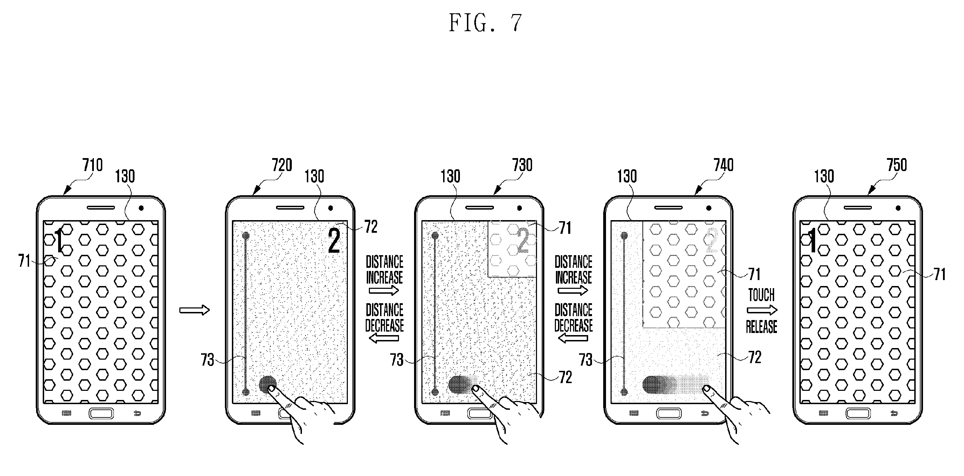

In an embodiment of the present disclosure, the current and navigation pages may be displayed in a partially overlapped manner in the state that the current page is fixed but the current page changes in transparency such that the navigational page moves from one side to an opposite side of the screen with the change of its transparency while the area overlapped with the current page increases. Detailed description thereon is made later with reference to FIG. 7.

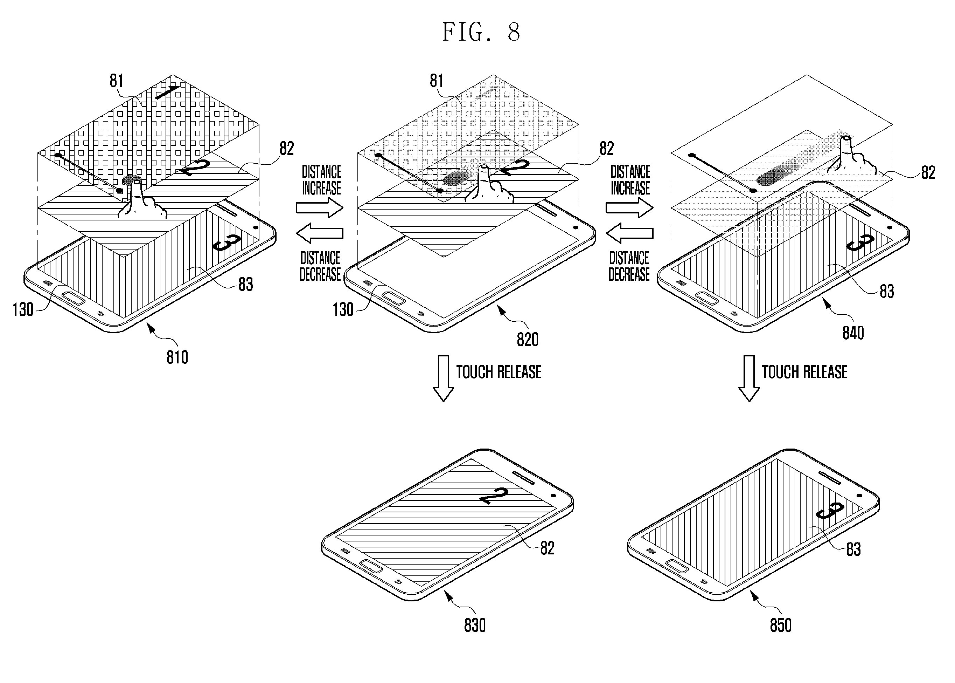

If there are plural navigational pages and if the distance between the dragged point and the initial touch point is greater than the second threshold as the distance corresponding to the 100% transparency of the current page, the control unit 110 may control the display panel 131 such that the current page and the next navigational page are overlapped. Detailed description thereon is made later with reference to FIG. 8.

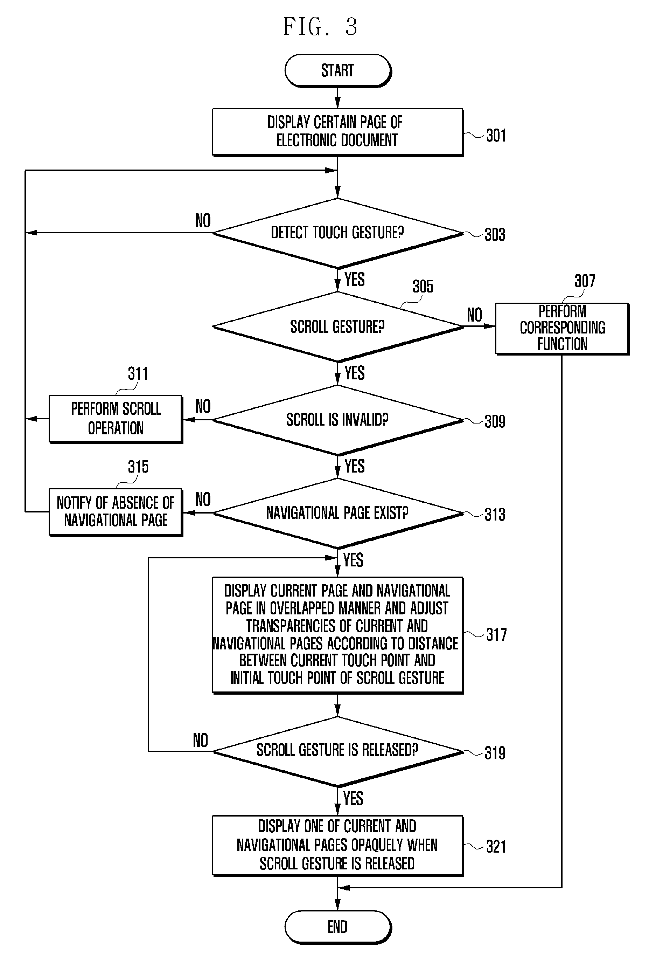

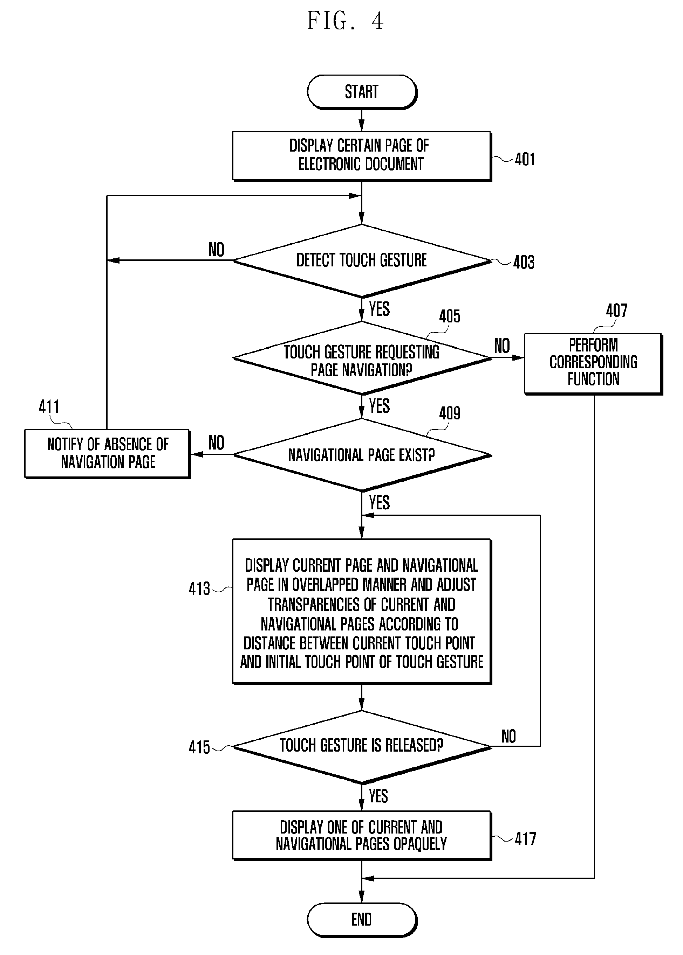

The page navigation method of the electronic device according to an embodiment of the present disclosure has been described schematically. A scroll gesture-based page navigation method according to the first embodiment and a touch gesture-based page navigation method according to the second embodiment are described hereinafter in more detail with reference to FIGS. 3 and 4, respectively.

FIG. 3 is a flowchart illustrating a page navigation method of an electronic device according to an embodiment of the present disclosure.

Referring to FIG. 3, the control unit 110 controls the display panel 131 to display a certain page of the electronic document at operation 301.

In the state that the certain page of the electronic device is displayed, the control unit 110 monitors to detect a touch gesture at operation 303. The control unit 110 may continue monitoring until the touch gesture is detected. If the touch gesture is detected, the control unit 110 determines whether the touch gesture is a scroll gesture at operation 305. A scroll gesture is a gesture requesting page navigation to navigate any page not shown in the current page, and may be made in at least one of up, down, left, and right directions.

If it is determined that the touch gesture is not a scroll gesture, the control unit 110 performs a function corresponding to the detected touch gesture. For example, the control unit 100 may perform at operation 307 a function corresponding to the tap, double tab, long tap, or cancel key input. Otherwise, if it is determined that the touch gesture is the scroll gesture, the control unit 110 determines whether the scroll gesture is valid at operation 309. At this time, if the scroll gesture is made in a direction to which the current page is the last page, the control unit 110 determines that the scroll gesture is invalid.

If it is determined that the scroll gesture is determined to be valid at operation 309, the control unit 110 performs the scroll operation at operation 311 and returns the procedure to operation 303. For example, if the scroll gesture is made in the direction from left to right, the control unit 110 scrolls the screen from left to right and returns the procedure to operation 303.

If it is determine that the scroll gesture is invalid at operation 309, the control unit determines whether there is at least one navigational page at operation 313. If there is no navigational page, the control unit 110 notifies of no navigational page at operation 315 and returns the procedure to operation 303. The notification can be made with a visual alarm (e.g., a change in colour), an audio alarm (e.g., an output of an alarm sound), or a tactile alarm (e.g., an output of a vibration).

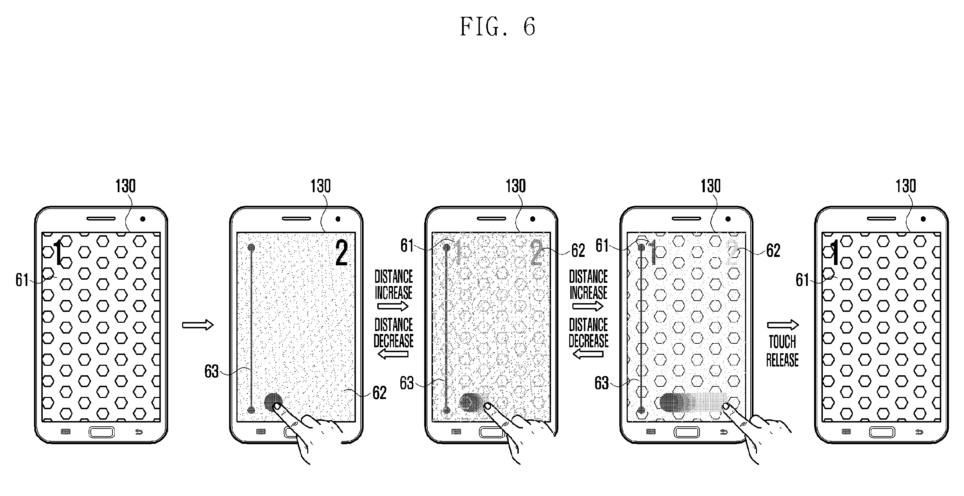

If there is at least one navigational page at operation 313, the control unit 110 displays the current page and the navigational page in an overlapped manner and adjusts the transparencies of at least one of the current and navigational pages at operation 317. The description on this operation is made later in more detail with reference to FIGS. 5 and 6.

Next, the control unit 110 monitors to detect the release of the scroll gesture at operation 319. The control unit 110 may continue monitoring until the scroll gesture is released. When the release of the scroll gesture is detected, the control unit 110 controls the display panel 131 to display one of the current and navigational pages opaquely at operation 321. As described with reference to FIG. 3, the control unit 110 compares the distance of the scrolled point at the time of the scroll gesture release with the initial touch point, or compares the transparency of the navigational page with a predetermined threshold, and controls such that one of the pages disappears and the other appears opaquely.

As described above, the page navigation method according to the first embodiment of the present disclosure is capable of facilitating screen scroll and page navigation with scroll gesture and allowing the user to check the pages to navigate in advance, resulting in improvement of user convenience. That is, the page navigation method according to the first embodiment of the present disclosure negates the need for separate touch gestures for screen scroll and page navigation.

FIG. 4 is a flowchart illustrating the page navigation method of the electronic device according to the second embodiment of the present disclosure.

Referring to FIG. 4, the control unit 110 controls the display panel 131 to display a certain page of an electronic document at operation 401.

In the state that a certain page of the electronic device is displayed, the control unit 110 monitors to detect a touch gesture at operation 403. The control unit 110 may continue monitoring until a touch gesture is detected. When the touch gesture is detected, the control unit 110 determines whether the touch gesture is a gesture predetermined for page navigation at operation 405. The page navigation gesture may include at least one of a previous page navigation gesture and a next page navigation gesture. The type of gesture can be configured by the user. For example, the gesture can be configured to be drawing a circle or a triangle.

If it is determined that the touch gesture is not the page navigation gesture at operation 405, the control unit 110 performs a function corresponding to the detected touch gesture at operation 407. For example, the control unit 110 may perform a function corresponding to a tap, a double tap, a long tap, or a cancel key input. Otherwise, if it is determined that the touch gesture is the page navigation gesture at operation 405, the control unit 110 determines whether there is any page to navigate at operation 409. It there is no page to navigate, the control unit 110 notifies of the absence of any page to navigate at operation 411 and returns the procedure to operation 403. The notification can be made with a visual alarm (e.g., a change in colour), an audio alarm (e.g., an output of an alarm sound), or a tactile alarm (e.g., an output of a vibration).

If there is any page to navigate, the control unit 110 controls such that the current page and the navigational pages are displayed in an overlapped manner at operation 413, and adjusts the transparencies of the current and navigational pages according to the distance of the moved point from the initial touch point. For example, if the touch gesture is of drawing a circle, the transparency may be adjusted by rotation. That is, if the touch gesture is detected, the transparency controller 111 of the control unit 110 controls such that the current page is displayed with the transparency of 0% and the navigational page is displayed with the transparency of 100% at the initial time point of drawing the circle. Afterwards, the transparency controller 111 may control such that, at the 1/4 point of drawing the circle, the transparency of the current page becomes 25% while the transparency of the navigational page becomes 75%. Likewise, the transparency controller 111 may control such that, at the 1/2 point of drawing the circle, both the transparencies of the current and navigational pages become 50%. Finally, the transparency controller 111 may control such that, the 3/4 point of drawing the circle, the transparency of the current page becomes 75% while the transparency of the navigational page becomes 25%. As noted above, it may be that only the transparency of one of the current page and the navigational page is adjusted.

Next, the control unit 110 monitors to detect the release of the page navigation gesture at operation 415. The control unit 110 continues monitoring until the page navigation gesture is released. If the release of the page navigation gesture is detected, the control unit 110 controls the display panel 131 to display one of the current and navigational pages opaquely at operation 417. Similar to the embodiment of FIG. 3, the control unit 110 compares the distance of the scrolled point at the time of the scroll gesture release from the initial touch point or the transparency of the navigational page with a predetermined threshold and controls such that one of the pages disappears and the other appears opaquely.

As described above, the page navigation method of the second embodiment of the present disclosure is capable of facilitating gesture input to navigate pages regardless of the state of the screen, and allowing the user to check the page to navigate in advance, resulting in improvement of user convenience.

FIGS. 5 to 10 are diagrams illustrating touch gestures made on the screen of the electronic device to navigate pages in the page navigation method according to an embodiment of the present disclosure.

FIG. 5 shows making the touch gesture for webpage navigation in a vertical direction according to an embodiment of the present disclosure.

Referring to FIG. 5, the touchscreen 130 may display a certain webpage 51 as illustrated in screen view 510 in response to a user request. If a touch gesture is made to a certain link on the webpage 51, the touch screen 130 displays the webpage 52 (hereinafter, referred to as current webpage) according to the link, as illustrated in screen view 520. The previous webpage 51 and the current webpage 52 may have a resolution higher than that of the touchscreen 130. The screen view 520 shows the state where the bottom end part of the current webpage 52 is displayed. This means that the webpage 52 cannot be scrolled upward any more in the state of the screen view 520. Reference number 53 denotes a mark indicating the end part of the current webpage 52, and may not be displayed on a real webpage.

If a scroll gesture requesting scrolling the screen upward is received in a state in which the webpage cannot be scrolled upward any more, as shown in the screen view 520, the touch screen 130 displays the current webpage 52 and the previous webpage 51 in an overlapped manner as shown in the screen views 530 and 540. At this time, the touchscreen 130 displays the current and previous webpages 52 and 51 with distinct transparencies varying depending on the distance between the current touch point and the initial touch point of the touch gesture under the control of the control unit 110. As discussed above, the transparency of either or both webpages may be adjusted. In more detail, if the scroll gesture is detected, the touchscreen 130 may initially display the current webpage 52 with the transparency of 0% and the previous webpage 51 with the transparency of 100%. Afterward, the touchscreen 130 may increase the transparency of the current webpage 52 and decrease the transparency of the previous webpage 51 as the distance between the initial touch point and the current touch point of the scroll gesture increases. If a movement of the touch point to the bottom of the screen is detected as shown in the screen view 540, i.e., if the distance between the current touch point and the initial touch point of the scroll gesture decreases, the touchscreen 130 may decrease the transparency of the current webpage 52 and increase the transparency of the previous webpage 51 as shown in the screen view 530.

If the scroll gesture is released in the state that the distance between the initial and current touch points of the scroll gesture is equal to or greater than the first threshold (e.g., a distance for which the transparency of the previous webpage becomes equal to or less than 50%), the touch screen 130 hides the current webpage 52 and shows the previous webpage 51 opaquely (transparency of 0%) as shown in the screen view 550.

FIG. 6 shows making the touch gesture for webpage navigation in a horizontal direction according to an embodiment of the present disclosure.

Referring to FIG. 6, if a scroll gesture is made in the right direction in the state that a webpage which cannot be scrolled in the right direction is displayed, as illustrated by the left edge 63 of the webpage, the touch screen 130 displays the previous webpage 61 and the current webpage 62 in the overlapped manner, changes the transparencies of at least one of the previous and current webpages 61 and 62, and displays, when the right direction scroll gesture is released, one of the previous and current pages 61 and 62. Since the webpage navigation method of FIG. 6 is identical with that of FIG. 5 with the exception of the scroll direction, detailed description is omitted herein. In FIG. 6, reference number 63 is a mark indicating the end part of the webpage 62 and may not be displayed on a real webpage.

FIG. 7 shows making the touch gestures for webpage navigation according to another embodiment of the present disclosure.

Referring to FIG. 7, the touchscreen 130 displays a certain webpage 71 in response to a user request as shown in the screen view 710. If a touch gesture is made to a certain link on the webpage 71, the touchscreen 130 displays another webpage 72 (hereinafter, referred to as current webpage) according to the link as shown in the screen view 720. The previous webpage 71 and the current webpage 72 may have a resolution higher than that of the touchscreen 130. The screen view 720 shows the state where a left end part of the current webpage 72 is displayed. This means that the webpage 72 cannot be scrolled rightward any more in the state of the screen view 720. In the screen views of FIG. 720 to 740, reference number 73 denotes a mark indicating the left end part of the webpage, and may not be displayed on a real webpage.

If a scroll gesture requesting for scrolling the screen rightward is received in the state that the webpage cannot be scrolled rightward any more as shown in the screen view 720, the touch screen 130 displays the current webpage 72 and the previous webpage 71 overlapped at least partially as shown in the screen views 730 and 740, and adjusts the transparencies of the current webpage 72 and the previous webpage 71 according to the distance between the current touch point and the initial touch point of the scroll gesture. In more detail, if the rightward scroll gesture is detected, the touchscreen 130 initially displays the current webpage 72 with the transparency of 0%. At this time, the previous webpage has the transparency of 100% and is not overlapped with the current webpage 72. Afterward, the touchscreen 130 displays the current and previous webpages 72 and 71 such that the previous webpage 71 moves from one end (e.g., top right) to an opposite end (e.g., bottom left) over the fixed current page and, as a consequence, the overlapped area increases as the distance between the current touch point and the initial touch point of the scroll gesture increases. At this time, the transparency of the current webpage 72 increases while the transparency of the previous webpage 71 decreases.

If a leftward scroll gesture is detected in the screen view 740, i.e., the distance between the current touch point and the initial touch point of the scroll gesture decreases, the touchscreen 130 decreases the transparency of the current webpage 72 and increases the transparency of the previous webpage 71 while moving the previous webpage 71 to the top right direction of the screen as shown in the screen view 730.

If the scroll gesture is released in the state that the distance between the current touch point and the initial touch point of the scroll gesture is equal to or greater than the first threshold (e.g., a distance corresponding to the previous webpage's transparency of 50% or a state where the previous webpage appears on the screen with the transparency equal to or greater than 50%), the touchscreen 130 hides the current webpage 72 and shows only the previous webpage 71 opaquely (transparency of 0%) as shown in the screen view 750.

Alternatively, the process shown in FIG. 7 could be viewed as the current and the previous webpages 72, 71 being continuously opaquely displayed. As the previous webpage 71 is displayed moving into the screen from the top right, the previous webpage 71 overlies the current webpage 72 such that a portion of the current webpage 72 is obscured. In addition, the transparency of one or both webpages may be adjusted as the previous webpage 71 moves into the screen. As a further alternative, FIG. 7 may be considered to show statically overlapped current and previous webpages 72, 71 in the uppermost webpage has a line separating a transparent portion and an opaque portion and the line moves according to the scroll gesture.

The previous webpage 71 may be displayed at a reduced scale in a thumbnail view overlapping the current webpage 72. The thumbnail view may be increased in size.

FIG. 8 shows making the touch gesture for navigating plural pages according to an embodiment of the present disclosure.

Referring to FIG. 8, the touchscreen displays a certain page 81 (hereinafter, referred to as the first page) as shown in the dissembled perspective screen view 810. The storage unit 120 may store a first previous page 82 (hereinafter, referred to as the second page) and a second previous page 83 (hereinafter, referred to as the third page) that were accessed before displaying the first page 81. Here, the second and third pages 82 and 83 may be stored in the form of thumbnail images. Although the screen view 810 shows all the first to third pages 81, 82, and 83,this depiction is for understanding only, and the touchscreen 130 displays only the first page 81 opaquely before the page navigation request is detected. That is, the second and third pages 82 and 83 are not displayed on the real touchscreen 130 in the screen view 810.

Although FIG. 8 is directed to the case where two previous pages exist, the present disclosure is not limited thereto. The storage unit 120 may store one or more previous pages.

If an upward scroll gesture is detected within the range of a predetermined second threshold in the state of the screen view 810, the touchscreen 130 displays the first and second pages 81 and 82 in an overlapped manner as shown in the screen view 820 and adjusts the transparencies of the first and second pages 81 and 82 according to the distance between the current touch point and the initial touch point of the scroll gesture. At this time, the if the scroll gesture is released in the state that the distance between the current touch point and the initial touch point of the upward scroll gesture is equal to or greater than the first threshold and equal to or less than the second threshold, the touchscreen 130 displays only the second page 82 as shown in the screen view 830. Meanwhile, if the scroll gesture is released in the state that the distance between the current touch point and the initial touch point of the scroll gesture is less than the first threshold, the touchscreen 130 displays the first page 81 as shown in the screen view 810.

If the distance between the current touch point and the initial touch point of the scroll gesture is greater than the second threshold in the state of the screen view 820, the touchscreen 130 displays the second and third pages 82 and 83 in an overlapped manner as shown in the screen view 840. That is, since the first page 81 has the transparency of 100%, it is not shown on the screen. Also, the first page 81 may be removed at the time when its transparency becomes 100%. Afterward, the touchscreen 130 adjusts the transparencies of the second and third pages 82 and 83 according to the distance between the current touch point and the initial touch point of the scroll gesture. At this time, the distance between the current touch point and the initial touch point of the scroll gesture is initialized. That is, the distance is recalculated from the point where the transparency of the first page becomes 100%. If the scroll gesture is released in the state where the recalculated distance between the current touch point and the initial touch point of the scroll gesture is equal to or greater than the first threshold and equal to or less than the second threshold, the touchscreen 130 displays only the third page 83 as shown in the screen view 850. If the scroll gesture is released in the state that the recalculated distance between the current touch point and the initial touch point of the scroll gesture is less than the first threshold, the touchscreen 130 display only the second page 82 as shown in the screen view 830.

The process of FIG. 8 may alternatively be considered to be all three webpages being opaque. As the touch point moves, the transparency of the first webpage 81 increases until it is completely transparent and then the transparency of the second webpage 82 increases until it is completely transparent.

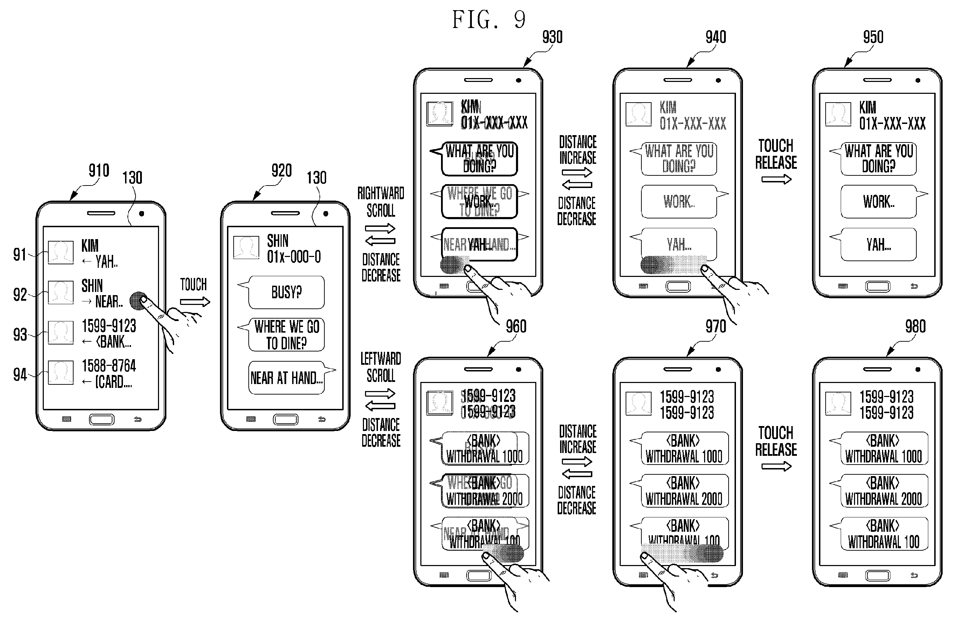

FIG. 9 shows making the touch gesture for scrolling a text message display screen according to an embodiment of the present disclosure.

Referring to FIG. 9, the touchscreen 130 displays a text message list in response to the execution of a text messaging function. For example, the touchscreen 130 may display the text message list including a first item 91, a second item 92, a third item 93, and a fourth item 94 as shown in the screen view 910.

If a touch gesture is made to the second item 92 of the text message list, the touchscreen 130 displays a first text message corresponding to the second item 92 as shown in the screen view 920. At this time, the first text message screen can be scrolled upward and downward, but not leftward or rightward.

If a rightward scroll gesture is detected in the state of the screen view 920, the touchscreen 130 displays a second text message screen corresponding to the first item 91 so as to be overlapped with the first text message screen as shown in the screen views 930 and 940, and adjusts the transparency of at least one of the first and second text message screens according to the distance between the current touch point and the initial touch point of the rightward scroll event. Afterward, if the rightward scroll gesture is released in the state that the distance between the current touch point and the initial touch point of the rightward scroll event is equal to or greater than the first threshold, the touchscreen 130 displays only the second text message screen as illustrated in screen view 950. If the rightward scroll gesture is released in the state that the distance between the current touch point and the initial touch point of the rightward scroll event is less than the first threshold, the touchscreen 130 displays only the first text message screen as illustrated in screen view 920.

If a leftward scroll gesture is detected in the state of the screen view 920, the touchscreen 130 displays the first text message screen and a third text message screen corresponding to the third item 93 in an overlapped manner and adjusts the transparency of at least one of the first and third text message screens according to the distance between the current touch point and the initial touch point of the leftward scroll event, as shown in the screen views 960 and 970. Afterward, if the leftward scroll gesture is released in the state that the distance between the current touch point and the initial touch point of the leftward scroll event is equal to or greater than the first threshold, the touchscreen 130 displays only the third text message screen, as illustrated in screen view 980. Also, if the leftward scroll gesture is released in the state that the distance between the current touch point and the initial touch point of the leftward scroll event is less than the first threshold, the touchscreen displays only the first text message screen as illustrated in screen view 920.

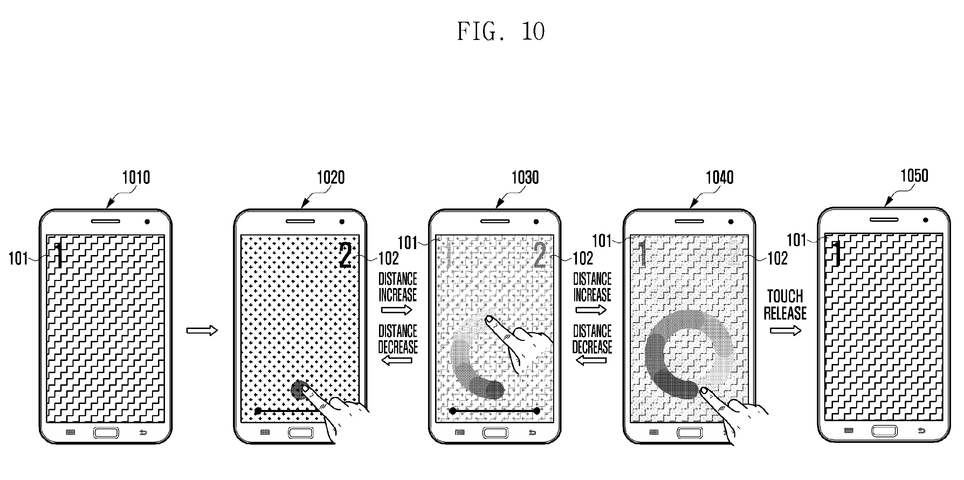

FIG. 10 shows making the touch gestures for webpage navigation according to an embodiment of the present disclosure.

Referring to FIG. 10, the touchscreen 130 displays a certain webpage 101 in response to a user request as shown in the screen view 1010. If a touch gesture is made to a certain link on the webpage 101, the touchscreen 130 displays another webpage 102 according to the link as shown in the screen view 1020.

If a predetermined gesture requesting page navigation (e.g., clockwise drawing gesture) is detected in the state of the screen view 1020, the touchscreen 130 displays the current webpage 101 and the linked webpage 102 in an overlapped manner as shown in the screens 1030 and 1040. At this time, the touch screen may adjust the transparency of at least one of the current and linked webpages 101 and 102 according to the distance between the current touch point and the initial touch point of the drawing gesture. In more detail, if the clockwise drawing gesture is detected, the touchscreen 130 may initially display the linked webpage with a transparency of 0% and the current webpage 101 with a transparency of 100%. Note that this is the reverse of the initial transparencies of a previously described embodiment. Afterward, the touchscreen 130 increases the transparency of the linked webpage 102 and decreases the transparency of the current webpage 101 as the distance between the current touch point and the initial touch point of the drawing gesture increases as shown in the screen views 1030 and 1040. If an anticlockwise drawing gesture is detected in the state of the screen view 1040, the touchscreen 130 decreases the transparency of the linked webpage 102 and increases the transparency of the current webpage 101.

If the drawing gesture is released in the state that the distance between the current touch point and the initial touch point of the drawing gesture is equal to or greater than the first threshold (e.g., a distance at which the transparency of the linked webpage becomes 50%), the touchscreen 130 hides the linked webpage 102 and shows the current webpage opaquely as shown in the screen view 1050. The touch gesture-based page navigation method of the present disclosure is capable of facilitating page navigation.

The above descriptions made with reference to FIGS. 5 to 10 have been directed to the webpage navigation and text message screen navigation method. However, the present disclosure is not limited thereto. For example, it will be clear to those in the art that the page navigation method of the present disclosure can be applied to a gallery application providing page navigation, a User Interface (UI), an electronic book, an address information display screen (displaying plural user information in an overlapped manner in response to leftward/rightward scroll on a user information screen), and an audio playback screen (displaying current playback screen with previous or next song information (e.g., image and title) in response to leftward/rightward scroll).

As described above, the electronic device and page navigation method thereof is capable of facilitating page navigation and allowing the user to check a page to navigate in advance. Accordingly, the present disclosure improves the user's convenience.

The above-described page navigation method of an electronic device according to an embodiment of the present disclosure can be implemented in the form of computer-executable program commands stored in a non-transitory computer-readable storage medium. It will be appreciated that embodiments of the present disclosure can be realized in the form of hardware, software or a combination of hardware and software. The non-transitory computer readable storage medium may store the program commands, data files, and data structures in individual or combined forms. The program commands recorded in the storage medium may be designed and implemented for various embodiments of the present disclosure or used by those skilled in the field. The non-transitory computer-readable storage medium includes magnetic media such as a floppy disk and a magnetic tape, optical media including a Compact Disc (CD)-Read Only Memory (ROM) and a Digital Versatile Disc (DVD)-ROM, a magneto-optical media such as a floptical disk, and the hardware device designed for storing and executing program commands such as ROM, Random Access Memory (RAM), and flash memory. The program commands may include higher language code executable by computers using an interpreter as well as the machine language codes created by a compiler. The aforementioned hardware device can be implemented with one or more software modules for executing the operations of the various embodiments of the present disclosure.

Accordingly, embodiments provide a program comprising code for implementing apparatus or a method as claimed in any one of the claims of this specification and a machine-readable storage storing such a program. Still further, such programs may be conveyed electronically via any medium, for example a communication signal carried over a wired or wireless connection and embodiments suitably encompass the same.

It will be appreciated from the following description that, in certain embodiments of the disclosure, features concerning the graphic design of user interfaces are combined with interaction steps or means to achieve a technical effect.

It will be appreciated from the following description that, in certain embodiments of the disclosure, graphic features concerning technical information (e.g. internal machine states) are utilised to achieve a technical effect.

Certain embodiments aim to achieve the technical effect of enhancing the precision of an input device.

Certain embodiments aim to achieve the technical effect of lowering a burden (e.g. a cognitive, operative, operational, operating, or manipulative burden) of a user when performing certain computer or device interactions.

Certain embodiments aim to achieve the technical effect of providing a more efficient man-machine (user-machine) interface.

While the present disclosure has been shown and described with reference to various embodiments thereof, it will be understood by those skilled in the art that various changes in form and details may be made therein without departing from the scope of the present disclosure as defined by the appended claims and their equivalents.

## Claims

1. A page navigation method of an electronic device, the method comprising:
displaying a first page;
detecting a touch gesture requesting navigation to a second page on a screen displaying the first page;
displaying the second page overlapped with the first page upon detection of the touch gesture;
changing a transparency of at least one of the first and second pages according to a movement distance between a current touch point and an initial touch point of the touch gesture; and
displaying, when the touch gesture is released, one of the first and second pages.

2. The method of claim 1, wherein displaying the second page comprises displaying the second page underneath the first page and changing the transparency of at least one of the first and second pages comprises increasing the transparency of the first page from opaque to transparent as the movement distance increases; or
wherein displaying the second page comprises displaying the second page on top of the first page and changing the transparency of at least one of the first and second pages comprises reducing the transparency of the second page from transparent to opaque as the movement distance increases.

3. The method of claim 1, wherein displaying the second page comprises initially presenting the first page with a transparency of 0% and the second page with a transparency of 100%, and changing of the transparency of at least one of the first and second pages comprises increasing the transparency of the first page and decreasing the transparency of the second page as the movement distance increases and decreasing the transparency of the first page and increasing the transparency of the second page as the movement distance decreases.

4. The method of claim 2 or claim 3, wherein displaying one of the first and second pages comprises:
comparing, when the touch gesture is released the movement distance to a first threshold; and
displaying the first or the second page according to the result of the comparison.

5. The method of claim 4, further comprising
displaying at least one further page overlapped with the first and second pages; and
comparing the movement distance to a second threshold larger than the first threshold, the second threshold corresponding to the second page being displayed and the first page not being displayed;
wherein if the movement distance is greater than the second threshold, the method further comprises changing the transparency of at least one of the second page and a further page according to the movement distance and, when the touch gesture is released, displaying one of the second page and a further page.

6. The method of any one of the preceding claims, wherein displaying the second page overlapped with the first page comprises the second page being displayed as a thumbnail image at least partially overlapping the first page; and
wherein the method further comprises increasing the area of overlap with the first page as the movement distance increases.

7. The method of any one of the preceding claim, further comprising:
checking, when the touch gesture is detected, whether a second page exists; and
providing a notification when no second page exists.

8. An electronic device, the device comprising:
a display panel configured to display a first page;
a touch panel configured to detect a touch gesture requesting navigation to a second page on a screen displaying the first page; and
a control unit configured to:
control the display panel to display the second page overlapped with the first page upon detection of the touch gesture;
change a transparency of at least one of the first and second pages according to a movement distance between a current touch point and an initial touch point of the touch gesture; and
display, when the touch gesture is released, one of the first and second pages.

9. The device of claim 8, wherein the control unit is further configured to:
control the display panel to display the second page underneath the first page and increase the transparency of the first page from opaque to transparent as the movement distance increases; or
control the display panel to display the second page on top of the first page and reduce the transparency of the second page from transparent to opaque as the movement distance increases.

10. The device of claim 8, wherein the control unit is further configured to control the display panel to initially present the first page with a transparency of 0% and the second page with a transparency of 100%, to increase the transparency of the first page and decrease the transparency of the second page as the movement distance increases, and decrease the transparency of the first page and increase the transparency of the second page as the movement distance decreases.

11. The device of claim 10, wherein the control unit is further configured to:
compare, when the touch gesture is released the movement distance to a first threshold; and
control the display unit to display the first or the second page according to the result of the comparison.

12. The device of claim 11, wherein the control unit is further configured to:
control the display panel to display at least one further page overlapped with the first and second pages; and
compare the movement distance to a second threshold larger than the first threshold, the second threshold corresponding to the second page being displayed and the first page not being displayed;
wherein if the movement distance is greater than the second threshold, the control unit is further configured to change the transparency of at least one of the second page and a further page according to the movement distance and, when the touch gesture is released, to control the display unit to display one of the second page and a further page.

13. The device of any one of claims 9 to 12, wherein the control unit is further configured to:
control the display unit to display the second page as a thumbnail image at least partially overlapping the first page; and
increase the area of overlap with the first page as the movement distance increases.

14. The device of any one of claims 9 to 13, wherein the control unit is further configured to:
check, when the touch gesture is detected, whether a second page exists; and
provide a notification when no second page exists.

15. The method of claim 5 or the device of claim 12, wherein the second threshold comprises:
a distance obtained by dividing one of horizontal and vertical lengths of a display panel by the number of displayed overlapped pages;
a distance obtained by dividing a distance between the initial touch point and an end of the screen in a direction of the touch gesture by the number of pages capable of being navigated; or
a predetermined distance.

16. The method or device of any one of the preceding claims, wherein the touch gesture comprises one of a gesture of drawing a predetermined figure and a scroll gesture made in a direction in which the first page cannot be scrolled.
